# EUROPEAN PATENT APPLICATION

(11) **EP 4 628 655 A1**
(43) Date of publication of application: **08.10.2025**
(21) Application number: 25155148.7
(22) Date of filing: 31.01.2025
(51) Int. Cl.: E02F 3/32, E02F 9/26, G08B 21/22

(54) **WORK-MACHINE CONTROL METHOD, WORK-MACHINE CONTROL PROGRAM, WORK-MACHINE CONTROL SYSTEM, AND WORK MACHINE**

(30) Priority: 22.02.2024 JP 2024025505
(71) Applicant: Yanmar Holdings Co., Ltd., Osaka-shi, Osaka (JP)
(72) Inventor: TANAKA, Katashi, Chikugo-shi (JP)
(74) Representative: Sekiguchi, Kazuya

(57) **Abstract**

[Problem] To provide a work-machine control method, a work-machine control program, a work-machine control system, and a work machine, that are less likely to annoy an operator.

[Solution] The work-machine control method is a control method for a work machine 3 including a traveling portion 31, a revolving portion 32, and a detecting device 5, in which an operation of the traveling portion 31 is restrained on the basis of both a detection result of the detecting device 5 and a revolving angle of the revolving portion 32. The revolving portion 32 is located above the traveling portion 31 and is capable of revolving around a rotation axis along a vertical direction with respect to the traveling portion 31. The detecting device 5 is disposed in the revolving portion 32 and detects a detection target object Ob1 in a monitoring area A1 around the revolving portion 32.

## Description

### TECHNICAL FIELD

The present invention relates to a work-machine control method, a work-machine control program, a work-machine control system, and a work machine, which are used for a work machine having a function of detecting a detection target object in a surrounding monitoring area.

### BACKGROUND ART

As a related art, there is known a work machine including a detecting device (surrounding monitoring device) that detects whether or not a detection target object is present in a monitoring area (set region) set around the work machine (for example, see Patent Document 1). In the work machine according to the related art, when a traveling operating device for operating a traveling portion (traveling device) of the work machine is operated when presence of a detection target object in the monitoring area is detected, the operation of the traveling portion is restricted.

### PRIOR ART DOCUMENT

### PATENT DOCUMENT

Patent Document 1: Japanese Unexamined Patent Publication No. 2021-014736

### SUMMARY OF INVENTION

### TECHNICAL PROBLEM

In the related art described above, when the detection target object is present in the monitoring area, the operation of the traveling portion is restricted regardless of a direction in which the detection target object is present as viewed from the traveling portion and thus, the operation of the traveling portion in a direction away from the detection target object is also restricted, and the operator may feel annoyed, for example.

An object of the present invention is to provide a work-machine control method, a work-machine control program, a work-machine control system, and a work machine that are less likely to annoy an operator.

### SOLUTION TO PROBLEM

A method for controlling a work machine according to an aspect of the present invention is a method for controlling a work machine including a traveling portion, a revolving portion, and a detecting device, the method including restraining of an operation of the traveling portion on the basis of both a detection result of the detecting device and a revolving angle of the revolving portion. The revolving portion is located above the traveling portion and is capable of revolving around a rotation axis along a vertical direction with respect to the traveling portion. The detecting device is disposed on the revolving portion and detects a detection target object in a monitoring area around the revolving portion.

A work-machine control program according to an aspect of the present invention is a program for causing one or more processors to execute the work machine control method.

A work-machine control system according to an aspect of the present invention is used in a work machine including a traveling portion, a revolving portion, and a detecting device and includes a restraint processing portion. The revolving portion is located above the traveling portion and is capable of revolving around a rotation axis along a vertical direction with respect to the traveling portion. The detecting device is disposed on the revolving portion and detects a detection target object in a monitoring area around the revolving portion. The restraint processing portion restrains the operation of the traveling portion on the basis of both the detection result of the detecting device and the revolving angle of the revolving portion.

A work machine according to an aspect of the present invention includes the work-machine control system and a machine body including the traveling portion and the revolving portion.

### ADVANTAGEOUS EFFECTS OF INVENTION

According to the present invention, it is possible to provide a work-machine control method, a work-machine control program, a work-machine control system, and a work machine that are less likely to annoy an operator.

### BRIEF DESCRIPTION OF DRAWINGS

FIG. 1 is a schematic perspective view illustrating an overall constitution of a work machine according to an Embodiment 1;
FIG. 2 is a schematic diagram illustrating a hydraulic circuit and the like of the work machine according to the Embodiment 1;
FIG. 3 is a schematic plan view schematically illustrating a monitoring area and the like set around the work machine according to the Embodiment 1 as viewed from above;
FIG. 4 is a schematic plan view for explaining a revolving operation of a revolving portion of the work machine according to the Embodiment 1;
FIG. 5 is a schematic plan view for explaining restraint processing by a work-machine control system according to the Embodiment 1;
FIG. 6 is a schematic plan view for explaining the restraint processing by the work-machine control system according to the Embodiment 1; and
FIG. 7 is a flowchart illustrating an operation example of the work-machine control system according to the Embodiment 1.

### DESCRIPTION OF EMBODIMENTS

Hereinafter, Embodiments of the present invention will be explained with reference to the accompanying drawings. The following Embodiments are examples that embody the present invention and do not intend to limit the technical scope of the present invention.

### Embodiment 1

### 1 Overall Constitution

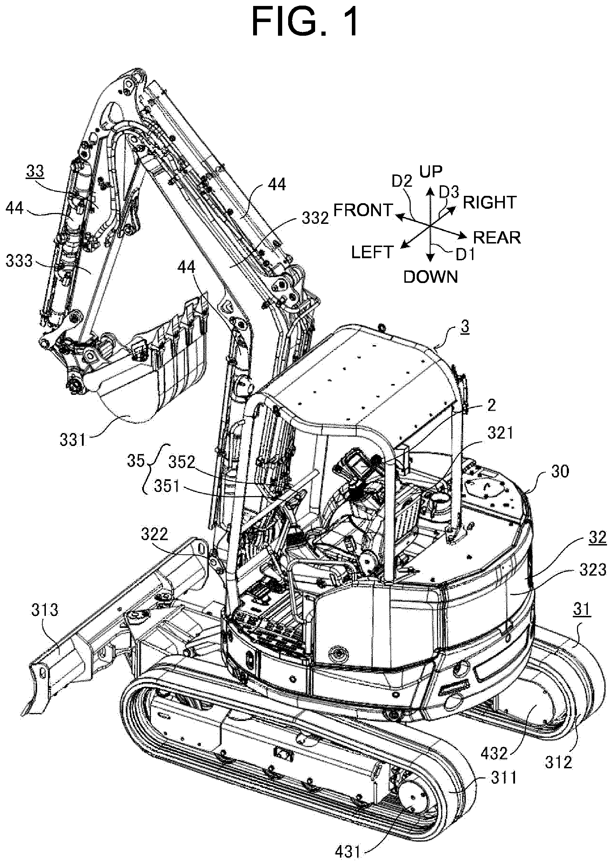

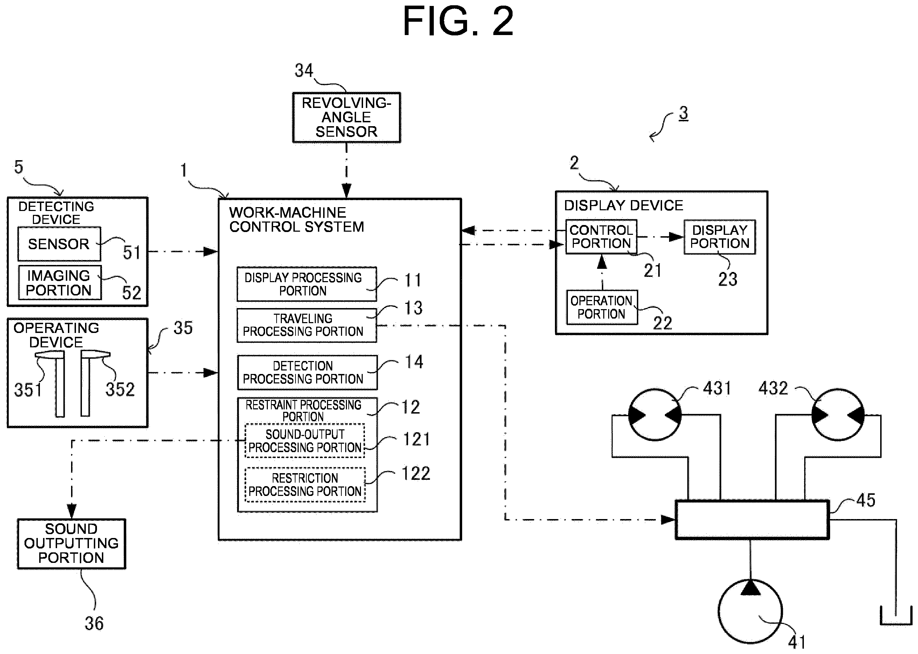

As shown in FIG. 1, a work machine 3 according to this embodiment has a machine body 30 including a traveling portion 31, a revolving portion 32, and a work portion 33. In addition, as shown in FIG. 2, the work machine 3 further includes a work-machine control system 1 (hereinafter also simply referred to as a "control system 1"). Moreover, the machine body 30 further includes a display device 2, an operating device 35, and a detecting device 5 (see FIG. 2) and the like.

The "work machine" referred to in the present disclosure means various types of work machines, and is, for example, a work vehicle such as a backhoe (including a hydraulic excavator, a mini excavator, and the like), a wheel loader, and a carrier. The work machine 3 includes the work portion 33 that is constituted capable of performing one or more works including at least a hanging work. The work machine 3 is not limited to a "vehicle" but may be, for example, a work ship, a work flying object such as a drone, a multicopter, or the like. Furthermore, the work machine 3 is not limited to a construction machine but may be, for example, an agricultural machine such as a rice transplanter, a tractor, or a combine harvester. In this Embodiment, unless otherwise specified, an example will be explained in which the work machine 3 is a backhoe with a hanging function (crane function) and is capable of performing works such as an excavating work, a ground leveling work, a trench excavating work, or a loading work in addition to a hanging work.

In addition, in this embodiment, for convenience of explanation, a vertical direction in a state where the work machine 3 is usable is defined as an up-down direction D1. Furthermore, in a non-revolving state of the revolving portion 32, a front-rear direction D2 and a right-left direction D3 are defined with directions seen from a user (an operator) who gets onboard (a driving portion 321 of) the work machine 3 as a reference. In other words, each of the directions used in this Embodiment is a direction that is defined with the machine body 30 of the work machine 3 as the reference, and a direction in which the machine body 30 moves during a forward travel of the work machine 3 is defined as a "front", and a direction in which the machine body 30 moves during a backward travel of the work machine 3 is defined as "rear". Similarly, a direction in which a front end part of the machine body 30 moves during a right turn of the work machine 3 is defined as "right", and a direction in which the front end part of the machine body 30 moves during a left turn of the work machine 3 is defined as "left". However, these directions are not intended to limit a use direction (direction in use) of the work machine 3.

The work machine 3 includes an engine serving as a power source. In the work machine 3, the machine body 30 is driven, when a hydraulic pump 41 (see FIG. 2) is driven by the engine, for example, when hydraulic oil is supplied from the hydraulic pump 41 to hydraulic actuators (including a traveling motor, a hydraulic cylinder 44, and the like) to parts of the machine body 30. In addition, the work machine 3 is controlled, for example, by the user (operator), who is onboard the driving portion 321 of the machine body 30, operating operation levers 351, 352 and the like of the operating device 35.

In this embodiment, since the work machine 3 is assumed to be a riding type backhoe as described above, the work portion 33 is driven in accordance with an operation of the user (operator) boarding on the driving portion 321 and performing a work such as an excavation work. The driving portion 321 which the user gets onboard is provided in the revolving portion 32.

The traveling portion 31 has a traveling function and is constituted capable of traveling (including revolving) on the ground. The traveling portion 31 includes a left traveling body 311, a right traveling body 312, a blade 313 and the like. The left traveling body 311 and the right traveling body 312 are disposed in the right-left direction D3 with a certain interval therebetween and are driven independently of each other. As one example in this embodiment, each of the left traveling body 311 and the right traveling body 312 is a crawler (crawler).

The traveling portion 31 further includes traveling motors 431, 432 (see FIG. 2) for traveling for driving the crawlers of the left traveling body 311 and the right traveling body 312. The traveling motor 431 drives the crawler of the left traveling body 311, and the traveling motor 432 drives the crawler of the right traveling body 312. In this Embodiment, as an example, the traveling motors 431, 432 are hydraulic motors (hydraulic actuators) and are driven by hydraulic oil supplied from the hydraulic pump 41. That is, the traveling portion 31 is a crawler-type (caterpillar-type) traveling device that causes the machine body 30 to travel by driving an endless-belt shaped crawler.

Here, the traveling motors 431, 432 can individually drive the left traveling body 311 and the right traveling body 312. For example, the traveling portion 31 is brought into a forward traveling state of traveling straight in the forward direction, when the left traveling body 311 and the right traveling body 312 are driven at a constant speed in the forward direction, and is brought into a backward traveling state of traveling straight in the backward direction, when the left traveling body 311 and the right traveling body 312 are driven at the constant speed in the backward direction. In addition, the traveling portion 31 is brought into a forward revolving state of revolving while traveling forward, when the left traveling body 311 and the right traveling body 312 are driven at a non-constant speed in the forward traveling direction and is brought into a backward revolving state of traveling backward while revolving, when the left traveling body 311 and the right traveling body 312 are driven at the non-constant speed in the backward direction. In addition, the traveling portion 31 is brought into a pivot turning (pivot turn) state, when either one of the left traveling body 311 and the right traveling body 312 is driven in a state where the driving of the other is stopped, and is brought into a spin turning (super pivot turn) state, when the left traveling body 311 and the right traveling body 312 are driven at a constant speed in the forward direction and the backward direction. Furthermore, the traveling portion 31 is brought into a traveling stopped state, when the driving of the left traveling body 311 and the right traveling body 312 is stopped.

The revolving portion 32 is located above the traveling portion 31 and is configured to be capable of revolving around the rotation axis along the vertical direction with respect to the traveling portion 31. The revolving portion 32 includes a hydraulic motor for revolving (hydraulic actuator) and the like. In the revolving portion 32, in addition to the driving portion 321, the engine, the hydraulic pump 41, and the like are mounted. Furthermore, a boom bracket 322 on which the work portion 33 is mounted is provided on a front end part of the revolving portion 32.

The work portion 33 is constituted capable of performing works including a hanging work. The work portion 33 is supported by the boom bracket 322 of the revolving portion 32 and performs a work. The work portion 33 includes a bucket 331, a boom 332, an arm 333, and the like. The work portion 33 further includes hydraulic actuators (including the hydraulic cylinder 44, a hydraulic motor and the like) for driving each part.

The bucket 331 is a type of attachment (work tool) attached to the machine body 30 of the work machine 3 and is constituted by an arbitrary tool selected from a plurality of types of attachments in accordance with the content of work. As an example, the bucket 331 is detachably attached to the machine body 30 and is replaced in accordance with the content of the work. As examples of attachments for the work machine 3, there are various tools such as a breaker, an auger, a crusher, a fork, a fork claw, a steel-frame cutter, an asphalt cutting machine, a mower, a ripper, a mulcher, a tilt rotator, a tamper and the like, for example, in addition to the bucket 331. The work portion 33 performs a work by driving the bucket 331 with power from a driving device.

The boom 332 is rotatably supported by the boom bracket 322 of the revolving portion 32. More specifically, the boom 332 is supported by the boom bracket 322 in a manner to be rotatable around the rotation axis along a horizontal direction. The boom 332 has a shape that extends upward from a base end part supported by the boom bracket 322. The arm 333 is coupled to a distal end of the boom 332. The arm 333 is supported rotatably around the rotation axis in the horizontal direction with respect to the boom 332. The bucket 331 is attached to a distal end of the arm 333.

The work portion 33 operates upon receipt of power from the engine as a power source. More specifically, the hydraulic pump 41 is driven by the engine, and the hydraulic oil is supplied from the hydraulic pump 41 to the hydraulic actuators (the hydraulic cylinder 44 and the like) of the work portion 33, whereby each of the components (the bucket 331, the boom 332, and the arm 333) of the work portion 33 operates.

Particularly in this Embodiment, the work portion 33 has an articulated structure in which the boom 332 and the arm 333 are constituted to be individually rotatable. That is, each of the boom 332 and the arm 333 is rotated around the rotation axis extending along the horizontal direction, whereby the articulated work portion 33 including the boom 332 and the arm 333, for example, is capable of performing operations such as extending and retracting as a whole.

Similarly to the work portion 33, each of the traveling portion 31 and the revolving portion 32 operates upon receipt of power from the engine as a power source. That is, the revolving portion 32 and the traveling portion 31 are operated when the hydraulic oil is supplied from the hydraulic pump 41 to the traveling motors 431, 431 of the traveling portion 31 and the hydraulic motor of the revolving portion 32 and the like.

The engine functions as a power source that supplies power to each part as described above. Here, the engine is mounted together with the hydraulic pump 41 and the like in the revolving portion 32. In this Embodiment, as an example, the engine is a diesel engine. The engine is driven by fuel (light oil, here) supplied from a fuel tank.

The display device 2 is disposed in the driving portion 321 of the machine body 30 and is a user interface for accepting an operation input by a user (operator) and for outputting various types of information to the user. The display device 2 accepts various operations from the user by outputting an electric signal in accordance with the user's operation, for example. As a result, the user (operator) can visually recognize a display screen displayed on the display device 2 and can operate the display device 2 as necessary.

The operating device 35 is mounted on the revolving portion 32 of the machine body 30 and is a device that accepts various operations from an operator boarding on the driving portion 321. The operating device 35 includes the operation levers 351, 352, which accepts at least the operation related to the traveling portion 31. The operation levers 351, 352 are disposed in front of the driving portion 321 in the revolving portion 32. The operation lever 351 accepts an operation for driving (the traveling motor 431 of) the left traveling body 311, and the operation lever 352 accepts an operation for driving (the traveling motor 432 of) the right traveling body 312. That is, the operator can individually drive the left traveling body 311 and the right traveling body 312 by operating the operation levers 351 and 352.

In this Embodiment, as an example, the operation lever 351 of the operating device 35 is located on the left-hand side as viewed from the operator boarding on the driving portion 321, and the operation lever 352 is located on the right-hand side as viewed from the operator boarding on the driving portion 321. Accordingly, the operator holds the operation lever 351 with his / her left hand and holds the operation lever 352 with his / her right hand, for example, and individually operates the pair of these operation levers 351, 352 to cause the various operations of the work machine 3 to be performed.

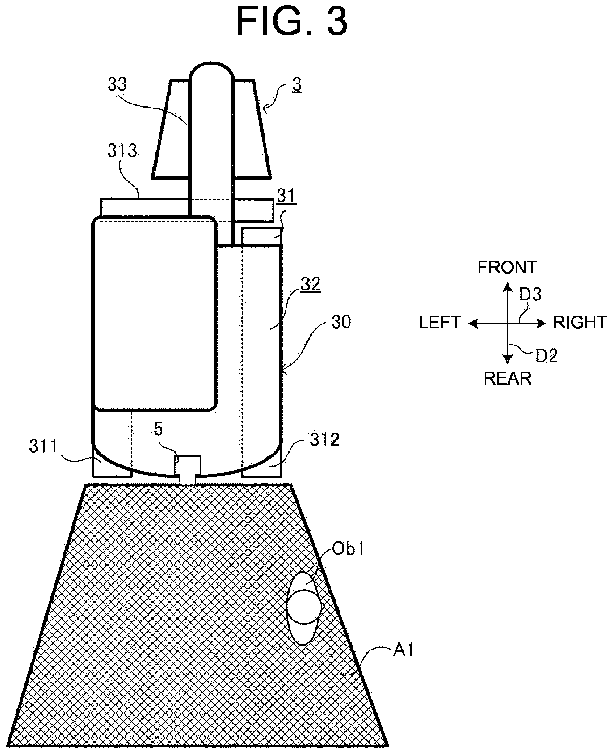

The detecting device 5 is a device for detecting a detection target object Ob1 (see FIG. 3) in a monitoring area A1 (see FIG. 3) around the work machine 3. The detecting device 5 is mounted on the revolving portion 32 of the machine body 30. The detecting device 5 is connected to the control system 1 and outputs a detection result of the detection target object Ob1 in the monitoring area A1 to the control system 1.

Here, the detecting device 5 is installed toward the rear so as to be able to detect the detection target object Ob1 in the monitoring area A1, which is the rear side when viewed from the operator boarding on the driving portion 321 of the revolving portion 32, as a target in the monitoring area A1. That is, a detection range of the detection target object Ob1 by the detecting device 5 is set to the rear side as viewed from the operator boarding on the driving portion 321. As a result, it becomes possible to cover the rear side, which is likely to be a blind spot for the operator, with the detecting device 5.

In this Embodiment, the detecting device 5 has a sensor 51 (see FIG. 2) and an imaging portion 52 (see FIG. 2). The sensor 51 is a three-dimensional sensor that measures a distance to the detection target object Ob1 by a Time Of Flight (TOF) method for measuring a distance to a ranging point on the basis of a round-trip time of a radio wave, light, sound, or the like to and from the ranging point. The sensor 51 is a ranging sensor such as a millimeter-wave radar, that uses the radio wave as a medium to identify the distance to the detection target object Ob1, an azimuth in which the detection target object Ob1 is present and the like. The imaging portion 52 is a camera (including an image sensor and optical elements) that captures an image of a detection region by the sensor 51 (the monitoring area A1). As described above, according to the detecting device 5 in which the sensor 51 and the imaging portion 52 are combined, in a case where the detection target object Ob1 is present in the monitoring area A1, it is possible to specify the three-dimensional position and the attribute (shape, size, color, movement and the like) of the detection target object Ob1.

That is, the detection result in the detecting device 5 can include presence or absence of the detection target object Ob1 in the monitoring area A1, the position of the detection target object Ob1 in the monitoring area A1, when the detection target object Ob1 is present in the monitoring area A1, the attribute of the detection target object Ob1 and the like. In addition, in this Embodiment, since the detecting device 5 includes the sensor 51 and the imaging portion 52, it is determined that the detection target object Ob1 is present, when the detection target object Ob1 is detected by both the sensor 51 and the imaging portion 52.

In short, the detecting device 5 disposed in the revolving portion 32 detects the detection target object Ob1 in the monitoring area A1 around the work machine 3. The detecting device 5 determines whether the detection target object Ob1 is present in the monitoring area A1 (presence or absence) and outputs a detection result indicating whether or not the detection target object Ob1 is present in the monitoring area A1. In this Embodiment, as an example, the detection target object Ob1 is a "person". That is, as the result in which the work machine 3 moved or a "person" around the work machine 3 moved, in a case where the "person" enters the monitoring area A1 around the work machine, the detecting device 5 detects the "person" as the detection target object Ob1. In a case where a plurality of the detection target objects Ob1 are present in the monitoring area A1, the detecting device 5 may also detect the number of the detection target objects Ob1 (the number of the persons).

FIG. 2 schematically illustrates a hydraulic circuit and an electric circuit (electrical connection relation) of the work machine 3 according to this Embodiment. In FIG. 2, solid lines represent high-pressure oil paths (for hydraulic oil), while one-dot chain arrows represent paths of an electric signal.

As shown in FIG. 2, the work machine 3 includes a direction switching valve (control valve) 45, a sound outputting portion 36, a revolving-angle sensor 34 and the like, in addition to the control system 1, the display device 2, the detecting device 5, the operating device 35, the hydraulic pump 41, the traveling motors 431 and 432, and the hydraulic cylinder 44 (not shown in FIG. 2). In FIG. 2, only the hydraulic circuits for the traveling motors 431, 432 of the traveling portion 31 is illustrated as hydraulic circuits, but the similar hydraulic circuit is constituted also for the hydraulic motor of the revolving portion 32 and the hydraulic actuator (hydraulic cylinder 44 and the like) of work portion 33.

The hydraulic oil from the hydraulic pump 41 driven by the engine is supplied to the traveling motors 431, 432 of the traveling portion 31, the hydraulic motor of the revolving portion 32, the hydraulic cylinder 44 of the work portion 33 and the like. As a result, the hydraulic actuators such as the traveling motors 431, 432 and the hydraulic cylinder 44 and the like are driven.

Here, in the hydraulic actuators of the traveling motors 431, 432 and the like, a direction switching valve 45 capable of switching the direction and a flowrate of the hydraulic oil from the hydraulic pump 41 is provided. The direction switching valve 45 is formed of, for example, an electromagnetic control valve (electromagnetic valve), is connected to the control system 1, and operates in response to a control signal (supply current) from the control system 1. That is, for example, the control system 1 can switch the direction and the flowrate of the hydraulic oil supplied from the hydraulic pump 41 to each of the traveling motors 431, 432 by controlling the direction switching valve 45.

Specifically, the control system 1 controls the direction switching valve 45 in accordance with the operation of the operation lever 351 of the operating device 35 and drives the left traveling body 311 in the forward direction or the backward direction by driving the traveling motor 431. In addition, the control system 1 controls the direction switching valve 45 in accordance with the operation of the operation lever 352 of the operating device 35 and drives the right traveling body 312 in the forward direction or the backward direction by driving the traveling motor 432.

Similarly, the hydraulic motor of the revolving portion 32, the hydraulic cylinder 44 of the work portion 33 and the like are also driven in accordance with the operation of the operating device 35, and can control the revolving operation (left revolving or right revolving and the like) of the revolving portion 32, the extending operation and contracting operation of the work portion 33 and the like.

The operating device 35 is an electric operating device 35 in this Embodiment and accepts various operations by the operator by outputting an electric signal (operation signal) corresponding to the operation of the operator to the control system 1.

Each of the operation levers 351, 352 is a stick-type (lever-type) operator and outputs an electric signal (operation signal) corresponding to an operation by being operated so as to be tilted to either one of a "front" and a "rear", for example. As an example, the operating device 35 outputs a different operation signal corresponding to each of an operation to tilt the operation lever 351 to the front, an operation to tilt the operation lever 351 to the rear, an operation to tilt the operation lever 352 to the front, and an operation to tilt the operation lever 352 to the rear.

The control system 1 has a computer system having one or more processors such as a Central Processing Unit (CPU) and one or more memories such as a Read Only Memory (ROM) and a Random Access Memory (RAM) as a main configuration and executes various types of processing (information processing). In this Embodiment, the control system 1 is an integrated controller that controls the entire work machine 3 and is composed of, for example, an Electronic Control Unit (ECU). However, the control system 1 may be provided separately from the integrated controller. The control system 1 will be explained in detail in the column of "2 Constitution of Control System".

As shown in FIG. 2, the display device 2 includes a control portion 21, an operation portion 22, and a display portion 23. The display device 2 is configured to be communicable with the control system 1 and can exchange data with the control system 1. In this Embodiment, as an example, the display device 2 is a dedicated device used for the work machine 3.

The control portion 21 controls the display device 2 in accordance with the data from the control system 1. Specifically, the control portion 21 outputs an electrical signal that corresponds to the user's operation accepted by the operation portion 22 and displays, on the display portion 23, the display screen that is generated by the control system 1.

The operation portion 22 is a user interface for accepting an operation input by a user (operator) to the display screen displayed on the display portion 23. The operation portion 22 accepts various operations by the user by outputting an electric signal that corresponds to the user's operation, for example.

The display portion 23 is a user interface for presenting information to a user (operator), such as a liquid crystal display or an organic EL display for displaying various types of information. The display portion 23 presents various types of information to the user by means of display.

The display device 2 presents various types of information on the display screen to a user (operator) who operates the work machine 3. That is, a user who operates the work machine 3 can visually acquire the various types of information related to the work machine 3 by seeing the display screen displayed on the display device 2. As an example, when the display device 2 displays information on the operating state of the work machine 3 such as a cooling-water temperature, a hydraulic-oil temperature and the like, the user can check, on the display device 2, the information on the operating state of the work machine 3 that is required to operate the work machine 3. In addition, the display device 2 can also display images of the area around the work machine 3 (images of the monitoring area A1) by the imaging portion 52 of the detecting device 5 on the display screen. As a result, when the user (operator) operates the work machine 3, the user can check a situation in the rear and the like of the work machine 3, which are likely to be blind spots from the driving portion 321, for example, on the display screen displayed on the display device 2.

The revolving-angle sensor 34 detects a revolving angle of the revolving portion 32 with respect to the traveling portion 31. The revolving-angle sensor 34 is electrically connected to the control system 1 and outputs the detected revolving angle to the control system 1. The revolving angle referred to here is a rotation angle of the revolving portion 32 around a rotation axis along the vertical direction (up-down direction D1) with respect to the traveling portion 31, with a state (state shown in FIG. 1) in which the driving portion 321 faces the front (blade 313 side) of the traveling portion 31 as "0 degrees".

The sound outputting portion 36 includes a buzzer, a speaker or the like and outputs sound upon receipt of an electric signal. The sound outputting portion 36 is connected to the control system 1 and outputs the sound such as a beep or voice in response to a sound control signal from the control system 1. In this Embodiment, similarly to the display device 2, the sound outputting portion 36 is provided on the driving portion 321 of the machine body 30. The sound outputting portion 36 may be provided integrally with the display device 2.

Moreover, in addition to the above-described constitution, the machine body 30 further includes a cutoff lever, a cutoff relay, a communication terminal, a fuel tank, a battery and the like. The cutoff relay is connected to the control system 1 and is switched between on and off in accordance with a control signal (electrical signal) from the control system 1. For example, in a state where the cutoff lever is operated upward (raised position), the cutoff relay forcibly shuts off the flow path of the hydraulic oil and disables the driving of the hydraulic actuator. In a state where the cutoff lever is operated downward (lowered position), the cutoff relay opens the flow path of the hydraulic oil and enables the hydraulic actuator to be driven in accordance with the operation of the operating device 35 or the like. The cutoff lever is a lever that is operated to lock the operation of the work machine 3 as described above and is synonymous with a gate-lock lever.

Further, the machine body 30 includes sensors for monitoring the operating state of the machine body 30, such as a cooling-water temperature sensor, a hydraulic-oil temperature sensor, a tachometer for measuring the number of revolutions of the engine, and an hour meter for measuring the operation time.

### 2 Configuration of Control System

Subsequently, a configuration of the control system 1 according to this Embodiment will be explained with reference to FIG. 2. The control system 1 controls each part of the machine body 30 (including the traveling portion 31, the revolving portion 32, and the work portion 33). The control system 1 is a constituent element of the work machine 3 and, together with the machine body 30 and the like, constitutes the work machine 3. In other words, the work machine 3 according to this Embodiment includes at least the control system 1 and the machine body 30 including the traveling portion 31 and the revolving portion 32.

As shown in FIG. 2, the control system 1 includes a display processing portion 11, a restraint processing portion 12, a traveling processing portion 13, and a detection processing portion 14. In this Embodiment, as an example, since the control system 1 has a computer system including one or more processors as a main configuration, these plujral functional portions (the display processing portion 11 and the like) are realized by one or more processors executing the work-machine control program. These plural functional portions included in the control system 1 may be separately provided in plural casings or may be provided in a single casing.

The control system 1 is configured capable of communication with devices provided in each part of the machine body 30. That is, to the control system 1, at least the display device 2, the detecting device 5, the revolving-angle sensor 34, the operating device 35, the sound outputting portion 36, the direction switching valve 45 and the like are connected. As a result, the control system 1 can control the display device 2, the sound outputting portion 36, the direction switching valve 45 and the like and can acquire the detection results of the detecting device 5, the operation signal from the operating device 35, and the detection result (revolving angle) of the revolving-angle sensor 34 and the like. Here, the control system 1 may directly transmit and receive various types of information (data) to and from each device or may indirectly do that via a relay or the like.

The display processing portion 11 executes display processing of causing at least a display screen to be displayed on the display device 2. Specifically, the display processing portion 11 generates a display screen including an image imaged by the imaging portion 52 of the detecting device 5 and controls the display device 2, for example, whereby the display screen is displayed on the display portion 23 of the display device 2. That is, the display processing portion 11 causes the image of the monitoring area A1 around the work machine 3 to be displayed on the display device 2.

The traveling processing portion 13 executes traveling processing for controlling the operation of the traveling portion 31. In this Embodiment, the traveling processing portion 13 controls the operation of the traveling portion 31 by controlling the traveling motors 431, 432 of the traveling portion 31 in accordance with the operation of the operating device 35.

Specifically, the traveling processing portion 13 drives the left traveling body 311 in the forward direction by the traveling motor 431 in response to an operation of tilting the operation lever 351 to the front (referred to as a "left-side forward operation") and drives the left traveling body 311 in the backward direction by the traveling motor 431 in response to an operation of tilting the operation lever 351 to the rear (referred to as a "left-side backward operation"). In addition, the traveling processing portion 13 drives the right traveling body 312 in the forward direction by the traveling motor 432 in response to an operation of tilting the operation lever 352 to the front (referred to as a "right-side forward operation") and drives the right traveling body 312 in the backward direction by the traveling motor 432 in response to an operation of tilting the operation lever 352 to the rear (referred to as a "right-side backward operation").

The detection processing portion 14 executes detection processing for detecting the detection target object Ob1 in the monitoring area A1. In this Embodiment, since the detecting device 5 detects the detection target object Ob1 in the monitoring area A1, the detection processing portion 14 detects the detection target object Ob1 in the monitoring area A1 by acquiring the detection result by the detecting device 5 from the detecting device 5.

The restraint processing portion 12 executes restraint processing for restraining the operation of the work machine 3 on the basis of the detection result of the detecting device 5 and the like. In this Embodiment, in the case where the detection result by the detecting device 5 is a result that indicates presence of the detection target object Ob1 (a person, here) in the monitoring area A1, the restraint processing portion 12 executes the restraint processing. The term "restraint processing" referred to in this disclosure means processing that restricts something in relation with the operation of the work machine 3. As an example, the restraint processing includes a processing of indirectly restraining an operation of the work machine 3 by giving warning to the user (operator) who operates the work machine 3 by means of sound or light (including display). Furthermore, the restraint processing includes processing of directly restraining the operation of the work machine 3 by controlling the traveling portion 31, the revolving portion 32, the work portion 33 or the like of the work machine 3.

In this Embodiment, the restraint processing portion 12 includes a sound-output processing portion 121 and a restriction processing portion 122.

The sound-output processing portion 121 causes the sound outputting portion 36 to output notification sound by controlling the sound outputting portion 36, when there is a detection target object Ob1 in the monitoring area A1. That is, in this Embodiment, the restraint processing includes sound output processing of outputting the notification sound. The notification sound may be a simple beep or may be voice such as a message "Please be careful". Furthermore, the notification sound may be changed in accordance with the detection result by the detecting device 5 (the distance from the machine body 30 to the detection target object Ob1 or the like). As a result, since the operation of the work machine 3 can be indirectly restrained by giving the warning to the user (operator) who operates the work machine 3 with the notification sound, a degree of freedom in operating the work machine 3 is high. That is, by the user operating the work machine 3 while paying attention to the detection target object Ob1, the operation of the work machine 3 can be continued while avoiding contact with the detection target object Ob1.

The restriction processing portion 122 forcibly stop the hydraulic actuator such as the traveling motors 431, 432 and the like of the traveling portion 31, for example, when the detection target object Ob 1 is present in the monitoring area A1. That is, in this Embodiment, the restraint processing includes the restriction processing of restricting the operation of the work machine 3. The term "restriction processing" referred to in the present disclosure means processing that restricts the operation of the work machine 3 in a restricting direction somehow.

As an example, the restriction processing includes processing of prohibiting the traveling operation of the traveling portion 31 (disabling the traveling operation) processing of prohibiting the revolving operation of the revolving portion 32 (disabling the revolving operation), processing of prohibiting the operation of the working portion 33 (disabling the work) and the like. As a result, the operation of the work machine 3 can be forcibly restricted irrespective of the operation performed by the user (operator). That is, the contact between the machine body 30 and the detection target object Ob1 due to the operation of the work machine 3 can be avoided.

Here, the restriction processing executed by the restriction processing portion 122 includes at least processing of restricting the traveling operation of the traveling portion 31. Specifically, the restriction processing portion 122 disables the traveling operation of the traveling portion 31 by disabling the output of the traveling processing portion 13. As a result, the traveling portion 31 makes an emergency stop during the traveling operation of the traveling portion 31, and the traveling operation of the traveling portion 31 is prohibited if not during the traveling operation of the traveling portion 31. As a result, when there is the detection target object Ob1 in the monitoring area A1, which is a blind spot for the user (operator), contact between the machine body 30 and the detection target object Ob1 caused by traveling of the traveling portion 31 can be avoided.

In this Embodiment, the restraint processing portion 12 restrains the operation of the traveling portion 31 on the basis of both the detection result of the detecting device 5 and the revolving angle of the revolving portion 32. That is, the restraint processing portion 12 uses not only the detection result of the detecting device 5 but also the revolving angle of the revolving portion 32 with respect to the traveling portion 31, when the operation of the traveling portion 31 is to be restrained. In this Embodiment, the revolving angle of the revolving portion 32 is specified by the output of the revolving-angle sensor 34. However, the revolving angle of the revolving portion 32 may be specified by means other than the revolving-angle sensor 34, for example, on the basis of a history of revolving operations by the operator, an image obtained by imaging the machine body 30 in a bird's eye view or the like.

The restraint processing related to the traveling operation of the traveling portion 31 executed by the restraint processing portion 12 will be explained in detail in the section of "3.2 Restraint processing".

In this Embodiment, the detection processing portion 14 acquires the detection result of the detecting device 5 outside the control system 1 and executes the detection processing of the detection target object Ob1 on the basis of the detection result, but this configuration is not limiting. For example, the detection processing portion 14 may execute the detection processing for the detection target object Ob1 in the monitoring area A1 on the basis of the output of the sensor 51 outside of the control system 1 and / or the imaging portion 52.

### 3 Control Method of Work Machine

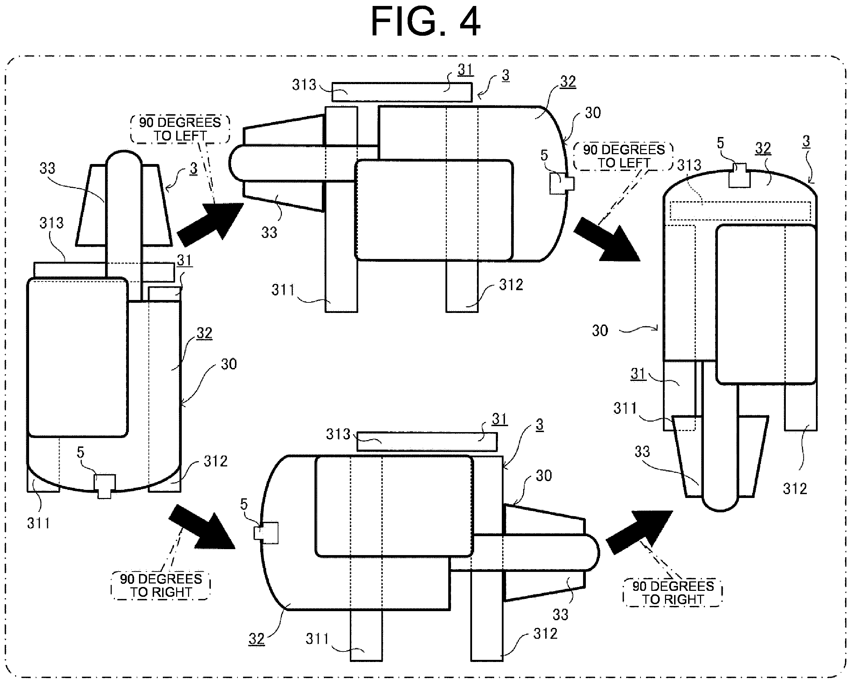

Hereinafter, with reference to FIG. 4 to FIG. 7, an example of a control method of the work machine 3 (hereinafter, simply referred to as a "control method"), which is executed mainly by the control system 1.

Since the control method according to this Embodiment is executed by the control system 1 having a computer system as a main configuration, the control method is embodied by a work-machine control program (hereinafter, simply referred to as a "control program") in other words. That is, the control program according to this Embodiment is a computer program for causing one or more processors to execute each processing related to the control method. Such a control program may be executed by the control system 1 and the display device 2 in cooperation with each other, for example.

Here, in a case where a specific start operation set in advance for executing the control program is performed, the control system 1 executes the following various types of processing related to the control method. The start operation is, for example, an operation of starting the engine of the work machine 3 or the like. On the other hand, the control system 1 ends the following various types of processing related to the control method, when a specific end operation set in advance is performed. The end operation is, for example, an operation of stopping the engine of the work machine 3 or the like.

### 3. 1 Revolving Operation

Here, the revolving operation of the revolving portion 32 by the control method according to this Embodiment will be explained described with reference to FIG. 4, first.

In this Embodiment, the revolving portion 32 can revolve by 360 degrees with respect to the traveling portion 31. The revolving portion 32 revolves by a predetermined revolving angle with respect to the traveling portion 31 in accordance with the operation of the operator.

Here, the revolving angle in a state where the driving portion 321 of the revolving portion 32 faces the front side (the blade 313 side) of the traveling portion 31 is assumed to be "0 degrees".

When the front end of the revolving portion 32 revolves by 90 degrees to the left from the state where the revolving angle is "0 degrees", the revolving portion 32 takes an attitude in which the driving portion 321 faces the left side (the left traveling body 311 side) of the traveling portion 31, as shown in FIG. 4. When the front end of the revolving portion 32 further revolves by 90 degrees to the left from this state, the revolving portion 32 takes an attitude in which the driving portion 321 faces the rear (the side opposite to the blade 313) of the traveling portion 31, as shown in FIG. 4.

Further, when the front end of the revolving portion 32 revolves to the right by 90 degrees from the state where the revolving angle is "0 degrees", the revolving portion 32 takes an attitude in which the driving portion 321 faces the right side (the right traveling body 312 side) of the traveling portion 31, as shown in FIG. 4. When the front end of the revolving portion 32 further revolves by 90 degrees to the right from this state, the revolving portion 32 takes an attitude in which the driving portion 321 faces the rear (the side opposite to the blade 313) of the traveling portion 31, as shown in FIG. 4.

The attitude of the revolving portion 32 is monitored all the time by the revolving angle detected by the revolving-angle sensor 34.

### 3. 2 Restraint Processing

Subsequently, in the control method according to this Embodiment, details of the restraint processing of the traveling operation of the traveling portion 31 will be explained.

In this Embodiment, when the detection result of the detecting device 5 is a result indicating presence of the detection target object Ob1 (here, a person) in the monitoring area A1, the restraint processing portion 12 executes restraint processing for restraining the operation of the traveling portion 31. Here, since the restraint processing includes the warning processing and the restriction processing, the restraint processing portion 12 basically executes both the warning processing and the restriction processing as the restraint processing. That is, when the detection target object Ob1 is present in the monitoring area A1, the restraint processing portion 12 indirectly restrains the operation of the work machine 3 by outputting the notification sound from the sound outputting portion 36 and directly restrains the operation of the traveling portion 31 by invalidating the output of the traveling processing portion 13.

Here, in this Embodiment, since the detecting device 5 is disposed in the revolving portion 32, when the revolving portion 32 revolves, the position (direction) of the monitoring area A1 as viewed from the traveling portion 31 changes. Thus, even when the presence of the detection target object Ob1 is detected in the monitoring area A1 in the same manner, the actual presence direction of the detection target object Ob1 as viewed from the traveling portion 31 varies depending on the revolving angle of the revolving portion 32.

Then, the control method according to this Embodiment is a control method for a work machine including the traveling portion 31, the revolving portion 32, and the detecting device 5, and when the operation of the traveling portion 31 is to be restrained, the operation of the traveling portion 31 is restrained on the basis of both the detection result of the detecting device 5 and the revolving angle of the revolving portion 32. The revolving portion 32 is located above the traveling portion 31 and is capable of revolving around the rotation axis along the vertical direction with respect to the traveling portion 31. The detecting device 5 is disposed in the revolving portion 32 and detects the detection target object Ob1 in the monitoring area A1 around the revolving portion 32.

In short, in this control method, the restraint processing portion 12 uses both the detection result of the detecting device 5 and the revolving angle of the revolving portion 32, when the operation of the traveling portion 31 is to be restrained. Thus, even when the revolving portion 32 revolves, the operation of the traveling portion 31 can be restrained by reflecting the position (direction) of the monitoring area A1 as viewed from the traveling portion 31. Thus, when the detection target object Ob 1 is present in the monitoring area A1, the operation of the traveling portion 31 can be restrained (restricted) in consideration of the presence direction of the detection target object Ob1 as viewed from the traveling portion 31 and thus, for example, it becomes possible not to restrain the operation of the traveling portion 31 in the direction away from the detection target object Ob1. As a result, it is possible to realize the control method, of the work machine 3, the work-machine control program, the work-machine control system 1, and the work machine 3 that are less likely to annoy the operator.

In more detail, in the control method according to this Embodiment, when the detection target object Ob1 is present in the monitoring area A1, the restraint processing portion 12 restrains the operation of the traveling portion 31 on the basis of the presence direction of the detection target object Ob1 as viewed from the traveling portion 31, which is specified from the detection result of the detecting device 5, and the revolving angle of the revolving portion 32. That is, the restraint processing portion 12 specifies the presence direction of the actual detection target object Ob1 as viewed from the traveling portion 31 from the detection result of the detecting device 5 and the revolving angle of the revolving portion 32. Then, the restraint processing portion 12 restrains the operation of the traveling portion 31 on the basis of the presence direction of the actual detection target object Ob1 specified in this way.

As a result, for example, when the presence direction of the actual detection target object Ob1 as viewed from the traveling portion 31 is the rear of the traveling portion 31, it becomes possible to allow the forward-moving operation of the traveling portion 31 and to restrain the backward-moving operation and the like. Therefore, it is possible to perform appropriate restraint processing in accordance with the presence direction of the actual detection target object Ob1 as viewed from the traveling portion 31.

Furthermore, in the control method according to this Embodiment, the restraint processing portion 12 restrains the operation of the traveling portion 31 when the presence direction of the detection target object Ob 1 as viewed from the traveling portion 31 corresponds to the moving direction of the traveling portion 31. In other words, when the presence direction of the detection target object Ob1 as viewed from the traveling portion 31 does not correspond to the moving direction of the traveling portion 31, the operation of the traveling portion 31 is not restrained. As a result, appropriate restraint processing can be executed in accordance with the presence direction of the actual detection target object Ob1 as viewed from the traveling portion 31.

Here, the presence direction of the detection target object Ob1 as viewed from the traveling portion 31 is determined at least in accordance with the set direction of the monitoring area A1 as viewed from the traveling portion 31. That is, since the disposition and the direction of the detecting device 5 with respect to the revolving portion 32 are known, when the revolving angle is specified, it is possible to specify the setting direction of the actual monitoring area A1 as viewed from the traveling portion 31.

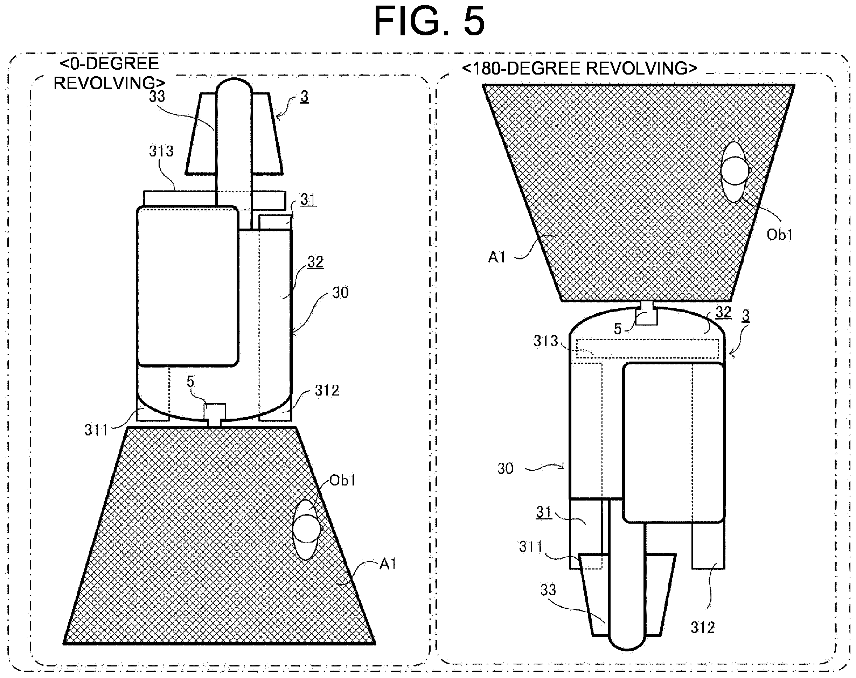

For example, as shown in FIG. 5, when the revolving angle is "0 degrees" (denoted as "0-degree revolving in FIG. 5), the setting direction of the monitoring area A1 as viewed from the traveling portion 31 is the rear (backward direction) of the traveling portion 31. In this case, if the detection target object Ob1 is present in the monitoring area A1, the presence direction of the detection target object Ob1 is the rear as viewed from the traveling portion 31. On the other hand, as shown in FIG. 5, when the revolving angle is "180 degrees" (denoted as "180-degree revolving" in FIG. 5), the setting direction of the monitoring area A1 as viewed from the traveling portion 31 is the front (forward direction) of the traveling portion 31. In this case, if the detection target object Ob1 is present in the monitoring area A1, the presence direction of the detection target object Ob1 is front as viewed from the traveling portion 31.

Here, in this Embodiment, the operation of the traveling portion 31 is classified into a plurality of operation patterns. In the control method according to this Embodiment, the restraint processing portion 12 restrains the operation of the traveling portion 31 for the operation pattern corresponding to the detection result of the detecting device 5 and the revolving angle of the revolving portion 32 among the plurality of operation patterns.

That is, since the operation of the traveling portion 31 is classified into a plurality of operation patterns, the operation of the traveling portion 31 is not restrained for all the operation patterns, but the operation of the traveling portion 31 is restrained only for the operation pattern corresponding to the presence direction of the detection target object Ob1 as viewed from the traveling portion 31. As a result, in a case where the detection target object Ob1 is present in the monitoring area A1, the operator is less likely to feel annoyed as compared with a constitution in which all the operations of the traveling portion 31 are restrained.

In more detail, in this Embodiment, the traveling portion 31 includes at least the left traveling body 311 and the right traveling body 312. Thus, the plurality of operation patterns are defined by combinations of the driving directions of each of the left traveling body 311 and the right traveling body 312. In short, the plurality of operation patterns include "forward traveling" (including a forward revolving state) in which both the left traveling body 311 and the right traveling body 312 are driven in the forward direction, "backward traveling" (including a backward revolving state) in which both the left traveling body 311 and the right traveling body 312 are driven in the backward direction, "pivot revolving" in which only one of the left traveling body 311 and the right traveling body 312 is driven in the forward or backward direction, and "spin revolving" in which the left traveling body 311 and the right traveling body 312 are driven in directions opposite to each other.

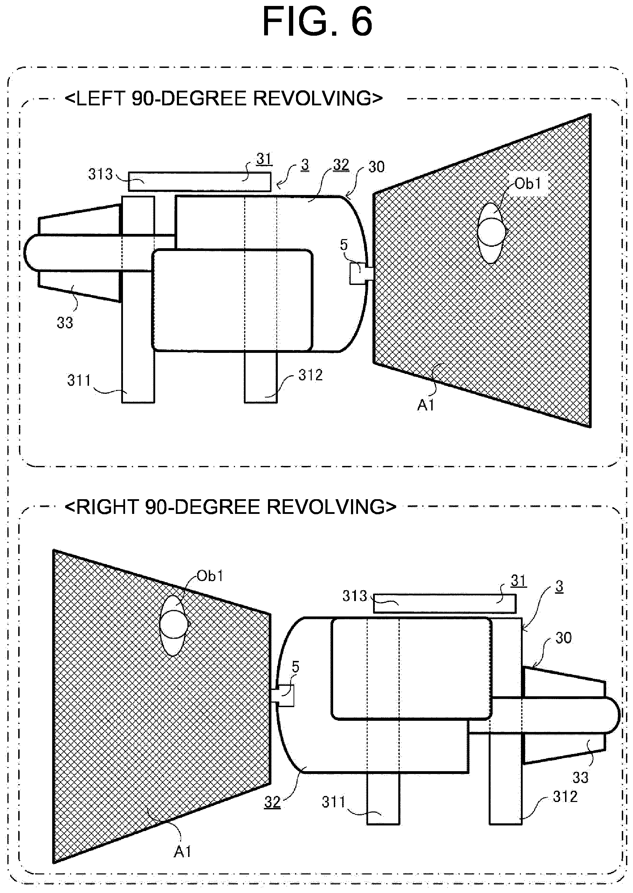

Hereinafter, a specific example of the restraint processing of the traveling operation of the traveling portion 31 will be indicated with reference to FIG. 5 and FIG. 6.

For example, as shown in FIG. 5, when the revolving angle is "0 degrees" (denoted as "0-degree revolving" in FIG. 5), the setting direction of the monitoring area A1 as viewed from the traveling portion 31 is the rear (backward direction) of the traveling portion 31. In this case, if the detection target object Ob1 is present in the monitoring area A1, the presence direction of the detection target object Ob1 is the rear as viewed from the traveling portion 31. In this case, the restraint processing portion 12 restrains only the "backward traveling" of the plurality of operation patterns, and allows operations ("forward traveling", "pivot revolving", and "spin revolving") of the traveling portion 31 other than the "backward traveling".

In addition, as shown in FIG. 5, when the revolving angle is "180 degrees" (denoted as "180-degree revolving" in FIG. 5), the setting direction of the monitoring area A1 as viewed from the traveling portion 31 is the front (forward direction) of the traveling portion 31. In this case, if the detection target object Ob1 is present in the monitoring area A1, the presence direction of the detection target object Ob1 is front as viewed from the traveling portion 31. In this case, the restraint processing portion 12 restrains only the "forward traveling" of the plurality of operation patterns, and allows operations ("backward traveling", "pivot revolving", and "spin revolving") of the traveling portion 31 other than the "forward traveling".

In addition, as shown in FIG. 6, when the revolving angle is "90 degrees" to the left (denoted as "90-degree revolving to the left" in FIG. 6), the setting direction of the monitoring area A1 as viewed from the traveling portion 31 is the right side of the traveling portion 31 (the side on the right traveling body 312 side). In this case, if the detection target object Ob1 is present in the monitoring area A1, the presence direction of the detection target object Ob1 is the right side as viewed from the traveling portion 31. In this case, the restraint processing portion 12 restrains only the "pivot revolving" and "spin revolving" of the plurality of operation patterns, and allows operations ("forward traveling" and "backward traveling") of the traveling portion 31 other than the "pivot revolving" and "spin revolving".

In addition, as shown in FIG. 6, when the revolving angle is "90 degrees" to the right (denoted as "90-degree revolving to the right" in FIG. 6), the setting direction of the monitoring area A1 as viewed from the traveling portion 31 is the left side of the traveling portion 31 (the side on the left traveling body 311 side). In this case, if the detection target object Ob1 is present in the monitoring area A1, the presence direction of the detection target object Ob1 is the left side as viewed from the traveling portion 31. In this case, the restraint processing portion 12 restrains only the "pivot revolving" and "spin revolving" of the plurality of operation patterns, and allows operations ("forward traveling" and "backward traveling") of the traveling portion 31 other than the "pivot revolving" and "spin revolving".

As described above, the restraint processing portion 12 restrains the revolving operation (including "pivot revolving" and "spin revolving") of the traveling portion 31, when the detection target object Ob1 is present on the side of the traveling portion 31. That is, when the detection target object Ob1 is present on the side of the traveling portion 31, the machine body 30 is unlikely to come into contact with the detection target object Ob1, even when the traveling portion 31 travels forward or backward. Thus, in such a case, only the revolving operation of the traveling portion 31 is restrained, and the other traveling operations of the traveling portion 31 are allowed, whereby the degree of freedom of the operation of the traveling portion 31 is improved, and the operator is less likely to feel annoyed.

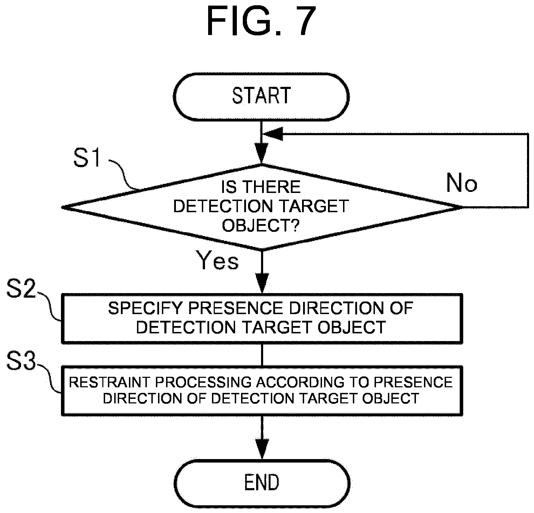

FIG. 7 is a flowchart illustrating an example of processing related to the restraint processing of the traveling operation of the traveling portion 31 in the control method.

As illustrated in FIG. 7, the restraint processing portion 12 of the control system 1 determines whether or not the detection target object Ob1 is present in the monitoring area A1 on the basis of the detection result of the detecting device 5 (S1). When the detection target object Ob1 is present in the monitoring area A1 (S1: Yes), the restraint processing portion 12 causes the processing to transfer to Step S2. On the other hand, if there is no detection target object Ob1 in the monitoring area A1 (S1: No), the control system 1 repeatedly executes Step S1.

At Step S2, the restraint processing portion 12 of the control system 1 specifies the presence direction of the actual detection target object Ob1 as viewed from the traveling portion 31 from the detection result of the detecting device 5 and the revolving angle of the revolving portion 32 (output of the revolving-angle sensor 34).

Then, at Step S3, the restraint processing portion 12 restrains the operation of the traveling portion 31 on the basis of the presence direction of the actual detection target object Ob1 specified as above. At this time, the operation of the traveling portion 31 is restrained only for the operation pattern corresponding to the presence direction of the actual detection target object Ob1 among the plurality of operation patterns.

The control system 1 repeatedly executes the processing at Steps S1 to S3 described above. However, the flowchart shown in FIG. 7 is merely an example and thus, the processing may be added or omitted as appropriate, or the order of the processing may be changed as appropriate.

### 4 Modification

Modifications of the Embodiment 1 will be listed below. The Modifications which will be explained below can be combined and applied as appropriate.

The control system 1 in the present disclosure includes a computer system. The computer system has one or more processors and one or more memory as hardware as a main configuration. When the processor executes the program that is recorded in the memory of the computer system, the function as the control system 1 in the present disclosure is realized. The program may be recorded in the memory of the computer system in advance, may be provided through the telecommunication line, or may be provided in a form recorded in the non-transitory recording medium such as a memory card, an optical disk, a hard disk drive or the like, each of which is readable by the computer system. Furthermore, some or all of the functional portions included in the control system 1 may be configured as an electronic circuit.

In addition, the configuration in which at least some of the functions of the control system 1 are integrated in one casing is not an essential configuration of the control system 1, and the constituent elements of the control system 1 may be provided in a distributed manner among a plurality of casings. On the contrary, the functions that are provided in the distributed manner among the plurality of devices (for example, the control system 1 and the display device 2) in the Embodiment 1 may be integrated in the single casing. Furthermore, at least some of the functions of the control system 1 may be realized by a cloud (cloud computing) or the like.

In addition, the work machine 3 is not limited to a riding type but may be, for example, an unmanned machine that is driven in accordance with a remote operation of a user (operator) from the outside of the work machine 3. In this case, functions corresponding to the display device 2, the sound outputting portion 36 and the like are preferably mounted on a terminal capable of performing wireless communication with the work machine 3, for example.

In addition, the power source of the work machine 3 is not limited to a diesel engine but may be an engine other than a diesel engine, a motor (electric motor), or a hybrid power source including an engine and a motor (electric motor), for example.

In addition, the display device 2 is not limited to a dedicated device but may be, for example, a general-purpose terminal such as a laptop computer, a tablet terminal, a smartphone or the like. Furthermore, the display portion 23 is not limited to such a form that directly displays a display screen, such as a liquid crystal display or an organic EL display but may be configured to display a display screen by projection such as a projector, for example.

In addition, the restriction processing executed by the restriction processing portion 122 only needs to be processing of restricting the operation of the work machine 3 and is not limited to such processing that prohibits the operation (disabling the operation) of the work machine 3. The restriction processing may be, for example, processing of reducing the operation speed (vehicle speed) of the traveling portion 31, processing of causing the traveling portion 31 to travel along a bypass route avoiding the detection target object Ob1, processing of restricting a traveling-allowed area of the traveling portion 31 or the like.

Furthermore, in addition to or instead of the detecting device 5, various sensors (including a camera) for detecting the detection target object Ob1 in the monitoring area A1 around the work machine 3, such as a plurality of cameras for imaging the surroundings of the machine body 30, may be added to the machine body 30. As an example, a camera that images the rear, the left, and the right of the revolving portion 32 may be mounted on the revolving portion 32.

In addition, the detection target object Ob1 may include moving objects such as vehicles (including other work machines), structures such as walls, columns and the like, plants, animals, steps, grooves or other obstacles in addition to or instead of "persons".

### Supplementary Note of Invention

Hereinafter, an outline of the invention extracted from the above-described Embodiment will be additionally described. Note that each of the configurations and processing functions described in the following Supplementary Notes can be selected and arbitrarily combined.

### Supplementary Note 1

A control method of a work machine
the work machine including a traveling portion, a revolving portion located above the traveling portion and capable of revolving around a rotation axis along a vertical direction with respect to the traveling portion, and a detecting device disposed in the revolving portion and detecting a detection target object in a monitoring area around the revolving portion, in which
an operation of the traveling portion is restrained on the basis of both a detection result of the detecting device and a revolving angle of the revolving portion.

### Supplementary Note 2

The control method of a work machine, described in Supplementary Note 1, in which
when the detection target object is present in the monitoring area, an operation of the traveling portion is restrained on the basis of a presence direction of the detection target object as viewed from the traveling portion specified from a detection result of the detecting device and a revolving angle of the revolving portion.

### Supplementary Note 3

The control method of a work machine, described in Supplementary Note 2, in which
when a presence direction of the detection target object as viewed from the traveling portion corresponds to a moving direction of the traveling portion, an operation of the traveling portion is restrained.

### Supplementary Note 4

The control method of a work machine, described in Supplementary Note 2 or 3, in which
a presence direction of the detection target object as viewed from the traveling portion is determined at least in accordance with a set direction of the monitoring area as viewed from the traveling portion.

### Supplementary Note 5

The control method of a work machine, described in any one of Supplementary Notes 1 to 4, in which
an operation of the traveling portion is classified into a plurality of operation patterns, and
in the plurality of operation patterns, the operation of the traveling portion is restrained for the operation pattern corresponding to a detection result of the detecting device and a revolving angle of the revolving portion.

### Supplementary Note 6

The control method of a work machine, described in Supplementary Note 5, in which
the traveling portion includes at least a left traveling body and a right traveling body, and
the plurality of operation patterns are defined by combinations of driving directions of each of the left traveling body and the right traveling body.

### Supplementary Note 7

The control method of a work machine, described in any one of Supplementary Notes 1 to 6, in which,
when the detection target object is present on a side of the traveling portion, a revolving operation of the traveling portion is restrained.

### Supplementary Note 8

The work-machine control program for causing one or more processors to execute
the control method of a work machine described in any one of Supplementary Notes 1 to 7.

### REFERENCE SIGNS LIST

1 Work-machine control system
3 Work machine
5 Detecting device
12 Restraint processing portion
30 Machine body
31 Traveling portion
32 Revolving portion
311 Left traveling body
312 Right traveling body
A1 Monitoring area
Ob1: Detection target object

## Claims

1. A work-machine control method, comprising:
a traveling portion, a revolving portion located above the traveling portion and capable of revolving around a rotation axis along a vertical direction with respect to the traveling portion, and a detecting device disposed in the revolving portion and detecting a detection target object in a monitoring area around the revolving portion, wherein
an operation of the traveling portion is restrained on the basis of both a detection result of the detecting device and a revolving angle of the revolving portion.

2. The work-machine control method according to claim 1, wherein
when the detection target object is present in the monitoring area, an operation of the traveling portion is restrained on the basis of a presence direction of the detection target object as viewed from the traveling portion specified from a detection result of the detecting device and a revolving angle of the revolving portion.

3. The work-machine control method according to claim 2, wherein
when a presence direction of the detection target object as viewed from the traveling portion corresponds to a moving direction of the traveling portion, an operation of the traveling portion is restrained.

4. The work-machine control method according to claim 2 or 3, wherein
a presence direction of the detection target object as viewed from the traveling portion is determined at least in accordance with a set direction of the monitoring area as viewed from the traveling portion.

5. The work-machine control method according to any one of claims 1 to 3, wherein
an operation of the traveling portion is classified into a plurality of operation patterns; and
in the plurality of operation patterns, the operation of the traveling portion is restrained for the operation pattern corresponding to a detection result of the detecting device and a revolving angle of the revolving portion.

6. The work-machine control method according to claim 5, wherein
the traveling portion includes at least a left traveling body and a right traveling body; and
the plurality of operation patterns are defined by combinations of driving directions of each of the left traveling body and the right traveling body.

7. The work-machine control method according to any one of claims 1 to 3, wherein
when the detection target object is present on a side of the traveling portion, a revolving operation of the traveling portion is restrained.

8. A work-machine control program for causing one or more processors to execute
the work-machine control method according to any one of claims 1 to 3.

9. A work-machine control system, wherein
the work-machine control system is used in a work machine comprising a traveling portion, a revolving portion located above the traveling portion and capable of revolving around a rotation axis along a vertical direction with respect to the traveling portion, and a detecting device disposed in the revolving portion and detecting a detection target object in a monitoring area around the revolving portion; and
includes a restraint processing portion which restrains an operation of the traveling portion on the basis of both a detection result of the detecting device and a revolving angle of the revolving portion.

10. A work machine comprising:
the work-machine control system according to claim 9; and
a machine body including the traveling portion and the revolving portion.
